# EUROPEAN PATENT SPECIFICATION

(11) **EP 1 121 565 B1**
(45) Date of publication and mention of the grant of the patent: **14.12.2005**
(21) Application number: 99951841.8
(22) Date of filing: 07.10.1999
(51) Int. Cl.: F25B 7/00, F25B 40/00, F24F 12/00

(54) **heat exchange refrigerant subcool and/or precool system and method**
Verfahren und Einrichtung zum vor-und/oder nachkühlenden Wärmeaustausch eines Kältemittels
Dispositf et méthode de transfert thermique pour pré et/ou sous-refroidir un réfrigérant

(30) Priority: 08.10.1998 US 168822
(43) Date of publication of application: 08.08.2001
(73) Proprietor: Global Energy Group, Inc., Odessa, Florida 33556 (US)
(72) Inventor: Hebert, Thomas, H., Lutz, FL 33612 (US)
(74) Representative: Hedley, Nicholas James Matthew
(86) International application number: PCT/US1999/023394
(87) International publication number: WO 2000/020809

(56) References cited:
- US-A- 4 023 949
- US-A- 4 173 865
- US-A- 4 280 334
- US-A- 4 373 346
- US-A- 4 380 910
- US-A- 4 910 971
- US-A- 5 113 668
- US-A- 5 664 425

## Description

### BACKGROUND OF THE INVENTION

### Field of the Invention

The present invention relates to a subcool and/or precool system and method for the liquid refrigerant and/or hot gas discharge refrigerant of an air conditioning, refrigeration or heat pump system (cooling mode) that utilizes either the exhaust air required for clean air operation of a building's conditioned air supply only, or the exhaust air and the condensate discharge from said air conditioning, refrigeration or heat pump system (or other water source), or outside air and said condensate (or other water source) to accomplish said subcooling and/or precooling for purposes of increasing the capacity and efficiency of said air conditioning, refrigeration or heat pump system.

The present invention further relates to a system for ducting the building exhaust air or outdoor air to said subcool and/or precool system. Said building exhaust air to be used after a preliminary sensible heat exchange with the required incoming make up air if possible.

### Description of the Background Art

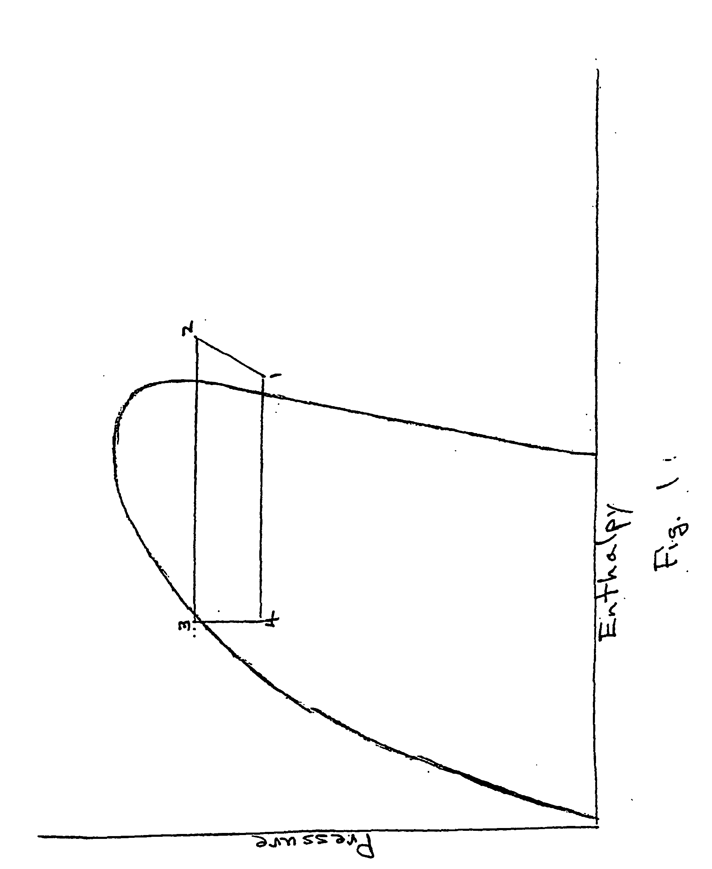

Presently there exist many types of devices designed to operate in the thermal transfer cycle. The vapor-compression refrigeration cycle is the pattem cycle for the great majority of commercially available refrigeration systems. This thermal transfer cycle is customarily accomplished by a compressor, condenser, throttling device and evaporator connected in serial fluid communication with one another. The system is charged with refrigerant, which circulates through each of the components. More particularly, the refrigerant of the system circulates through each of the components to remove heat from the evaporator and transfer heat to the condenser. The compressor compresses the refrigerant from a low-pressure superheated vapor state to a highpressure superheated vapor state thereby increasing the temperature, enthalpy and pressure of the refrigerant. A superheated vapor is a vapor that has been heated above its boiling point temperature. It leaves the compressor and enters the condenser as a vapor at some elevated pressure where the refrigerant is condensed as a result of the heat transfer to cooling water and/or to ambient air. The refrigerant then flows through the condenser condensing the refrigerant at a substantially constant pressure to a saturated-liquid state. The refrigerant then leaves the condenser as a high pressure liquid. The pressure of the liquid is decreased as it flows through the expansion valve causing the refrigerant to change to a mixed liquid-vapor state. The remaining liquid, now at low pressure, is vaporized in the evaporator as a result of heat transfer from the refrigerated space. This vapor then enters the compressor to complete the cycle. The ideal cycle and hardware schematic for vapor compression refrigeration is shown in Fig. 1 as cycle 1-2-3-4-1. More particularly, the process representation in Fig. 1 is represented by a pressure-enthalpy diagram, which illustrates the particular thermodynamic characteristics of a typical refrigerant. The P-h plane is particularly useful in showing the amounts of energy transfer as heat. Referring to Fig. 1, saturated vapor at low pressure enters the compressor and undergoes a reversible adiabatic compression, 1-2. Adiabatic refers to any change in which there is no gain or loss of heat. Heat is then rejected at constant pressure in process 2-3. An adiabatic pressure change occurs through the expansion device in process 3-4, and the working fluid is then evaporated at constant pressure, process 4-1, to complete the cycle. However, the actual refrigeration cycle may deviate from the ideal cycle primarily because of pressure drops associated with fluid flow and heat transfer to or from the surroundings. It is readily apparent that the temperature of the liquid refrigerant plays an important role in the potential for removing heat in the evaporator phase of the thermal cycle. The colder the liquid refrigerant entering the evaporator, the greater the possible change in enthalpy or heat energy absorbed per unit mass of liquid available for vaporization and the colder the liquid refrigerant entering the expansion device leading to the evaporator, the lower the flash gas loss, which means a higher portion or percentage of mass is available for vaporization through the evaporator.

Also, it is readily apparent that rapid precooling of the hot gas discharge from a compressor lowers compressor power consumption, improves compressor efficiency and improves the primary condenser's performance. It is also readily apparent that adding more heat to the evaporator (postheater) of a heat pump in the heating mode improves the systems' coefficient of performance. Many such devices and methods currently exist that are designed to accomplish this subcooling and precooling or postheating.

However, these known methods and devices have drawbacks. The drawbacks include the high cost of accomplishing the subcooling and/or precooling and/or postheating, and/or the ineffectiveness or degrading effectiveness of the subcooling and/or precooling and/or posting method and/or device.

In response to the realized inadequacies of earlier methods and devices, and because of the recently mandated indoor clean air act that requires a certain percentage of indoor air to continually be replaced, it became clear that there was a need for a liquid refrigerant subcooler for an air conditioning or heat pump system that has a low initial cost as well as having a method for utilizing the relatively cold, dry air that is exhausted from a building air supply for purposes of maintaining good indoor air quality as well as for alternatively also utilizing the condensate from said air conditioning or heat pump (or other water source) to accomplish said subcooling conductively or evaporatively, or to use the condensate and alternatively the outdoor air to subcool evaporatively.

It is also readily apparent that rapid precooling of the hot gas discharge from a compressor reduces head pressure, decreases power consumption, increases refrigerant mass flow and improves the efficiency of an air conditioner, refrigeration or heat pump system.

The use of the relatively cold, dry exhaust air only, or with the use of the exhaust air or alternatively with the use of outdoor air and the use of the condensate (or other water source) directly or even after the exhaust air only or exhaust air and condensate being first used to subcool the liquid refrigerant or alternatively after outdoor air and condensate being first used to subcool the liquid refrigerant, will provide this precooling in a very cost effective manner.

The building exhaust air is warm relative to outside air when heating is required by a heat pump, therefore another objective of the present invention is to reclaim the heat in the exhaust air by using this exhaust air to first reclaim heat from the subcooler then subsequently provide additional heat to a secondary evaporator, a postheater (precooler in the cooling mode), or alternatively to use the exhaust air without first subcooling to postheat the refrigerant when a heat pump is operating in the heating mode.

US-5,113,668 describes a refrigeration system including a compressor, condenser and evaporator and uses an evaporative subcooler downstream of the condenser for cooling refrigerant after it has left the condenser and before it is fed to the evaporator in the refrigeration cycle. Condensed water is used as the evaporating medium in the evaporative subcooler.

US-4,910,971 describes an air conditioning system in which building exhaust air is used in order to cool incoming fresh air. The system disclosed includes a refrigeration cycle having a condenser which can be cooled by exhaust gas after it has been treated with liquid sprays.

US-4,373,346 describes a refrigeration apparatus, including a precooler and a subcooler which are arranged to cool the refrigerant entering and leaving the condenser of the refrigeration cycle.

US-4,023,949 describes an evaporative refrigeration system in which evaporating water is used to cool air by means of a heat exchanger and cooling is performed without the addition of water vapour to the air.

### Summary of the Invention

The present invention is defined by the appended claims with the specific embodiment shown in the attached drawings.

One embodiment of the present invention provides an apparatus that allows conductive or alternatively evaporative subcooling of the liquid refrigerant by means of the cold, dry building exhaust air only or alternatively by means of the building exhaust air or outdoor air and by means of evaporating the condensate (or other) water from the wetted surface of the subcool heat exchanger, which subcools the refrigerant conductively or alternatively which reduces the temperature of the remaining water and the surface of the subcool heat exchanger to the wet bulb temperature of the building exhaust air which in turn subcools the liquid refrigerant inside the tubes of the subcool heat exchanger. Both the building exhaust air and/or the condensate water can be provided by the air conditioning, refrigeration or heat pump system needing the additional refrigeration effect caused by the refrigerant subcooling.

Moreover, this present invention may be configured by means of a second apparatus that satisfies the need for lower power consumption, increased pumping efficiency of the compressor, as well as improving the primary condensers performance by means of increased hot gas refrigerant precooling accomplished by utilizing the cold, dry exhaust air required for clean air operation of a building's air supply only or alternatively using the building exhaust air or outdoor air supply and the air conditioning or heat pump systems condensate (or other) water supply to accomplish this precooling conductively or alternatively evaporatively or after first use in the subcooler of the first apparatus. Another alternative would be to precool the hot gas conductively with the cooler and higher humidity air being discharged from the evaporatively cooled subcooler.

In a second embodiment of the invention, the hot gas discharge line coming off of the compressor of an air conditioner, refrigeration or heat pump system is serially connected to an air to refrigerant precool heat exchanger before being connected serially to the hot gas line leading to the condenser. The cold, dry building exhaust air or alternatively outdoor air being directed (or after first being directed through the subcooler of the first apparatus) through said condensate (or other water supply) wetted precool heat exchanger or as an alternate, through a dry, precool heat exchanger.

Simply, this second apparatus allows evaporative (or conductive) precooling of the hot gas refrigerant by means of the cold, dry building exhaust air or outdoor air and condensate (or other) water or by means of the discharge of the air and water from the subcooler of the first apparatus where the cold, dry building exhaust air or outdoor air and condensate (or other) water is first used to subcool the liquid refrigerant and then used subsequently to precool the hot gas refrigerant.

The foregoing has outlined rather broadly, the more pertinent and important features of the present invention. The detailed description of the invention that follows is offered so that the present contribution to the art can be more fully appreciated. Additional features of the invention will be described hereinafter. These form the subject of the claims of the invention. It should be appreciated by those skilled in the art that the conception and the disclosed specific embodiment may be readily utilized as a basis for modifying or designing other structures for carrying out the same purposes of the present invention within the scope of the invention as set forth in the appended claims.

### Brief Description of the Drawings

For a more succinct understanding of the nature and objects of the present invention, reference should be directed to the following detailed description taken in connection with the accompanying drawings in which:
Fig. 1 is a representation of the refrigeration process on a pressure enthalpy diagram.
Fig. 2 is a hardware schematic of the vapor compression cycle for an air conditioner, refrigeration or heat pump system showing the location of the building exhaust air or outdoor air and condensate (or other) water evaporatively cooled (or alternatively air only, sensibly cooled) subcooler.
Fig. 2a is a perspective view showing the relationship between the liquid refrigerant subcool heat exchanger and a possible flow direction of the building exhaust air through the condensate and/or other water wetted(or dry, air cooled only) subcooler.
Fig. 2b is a perspective view showing the relationship between the liquid refrigerant subcool heat exchanger and a possible flow direction of outside air through the condensate and/or other water wetted subcooler.
Fig 3 is a hardware schematic of the vapor compression cycle for an air conditioner, refrigeration or heat pump system showing the location of the building exhaust air or alternatively outdoor air and condensate (or other) water evaporatively cooled(or alternatively air only, sensibly cooled) precooler.
Fig. 3a is a perspective view showing the relationship between the hot gas refrigerant precool heat exchanger and a possible flow direction of the building exhaust air as well as the condensate and/or other water flow through said precooler.
Fig. 3b is a perspective view showing the relationship between the hot gas refrigerant precool heat exchanger and a possible flow direction of outside air through the condensate and/or other water wetted precooler.
Fig. 4 is a hardware schematic of the vapor compression cycle for an air conditioner refrigeration or heat pump system showing the location of the combined building exhaust air or outdoor air and condensate and/or other water evaporatively(or if no water used, sensibly cooled) cooled subcooler plus secondary use combined building exhaust air or outdoor air and condensate and/or other water evaporatively cooled (or if secondary exhaust air used only, sensibly cooled) precooler.
Fig. 4a is a perspective view showing the relationship between the liquid refrigerant subcool heat exchanger and the hot gas refrigerant precool heat exchanger and the possible flow direction of the building exhaust air through, as well as a possible flow direction of the condensate and/or other water across said subcooler and precooler
Fig. 4b is a perspective view showing the relationship between the liquid refrigerant subcool heat exchanger and the hot gas refrigerant precool heat exchanger and a possible flow direction of outside air through a condensate(and/or other water) wetted subcooler and then the air exhausting from the subcooler flowing through a condensate (and/or other water) wetted precooler(or alternatively through a dry precooler).
Fig. 5 is a hardware schematic of the vapor compression cycle for a heat pump in the heating mode (condenser in conditioned space) showing the location of the combined building exhaust air cooled, subcooler and a postheater that absorbs heat from a secondary pass of this subcooler heated building exhaust air or alternatively using outdoor air through said subcooler first, before reclaiming the liquid heat in the post heater.
Fig. 5a is a perspective view showing the relationship between the liquid refrigerant subcool heat exchanger and the suction gas refrigerant postheater heat exchanger and a possible flow direction of the building exhaust air through said subcooler and postheater.
Fig. 5b is a perspective view showing the relationship between the liquid refrigerant subcool heat exchanger and the suction gas refrigerant postheater heat exchanger and a possible flow direction of outside air through said subcooler and postheater.
Fig. 6 is a hardware schematic showing some of the possible pump and control mechanisms for controlling the flow of condensate and/or other water across the subcooler and precooler heat exchangers.
Fig. 7 is a hardware schematic showing an alternative non pumped, capillary feed system for wetting the heat exchanger(s) with condensate and/or other water.

### Detailed Description of the Preferred Embodiment

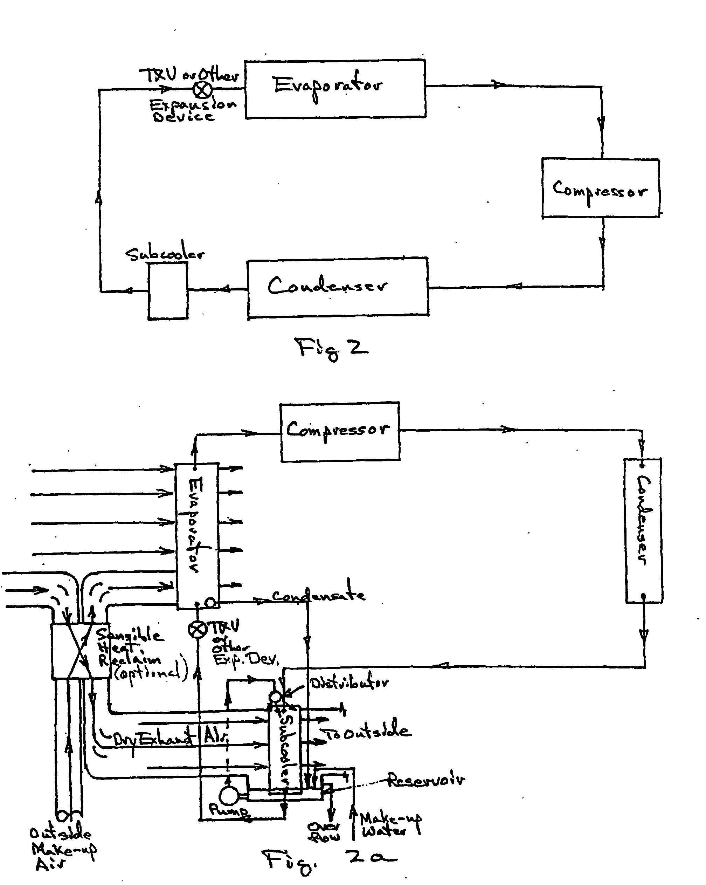

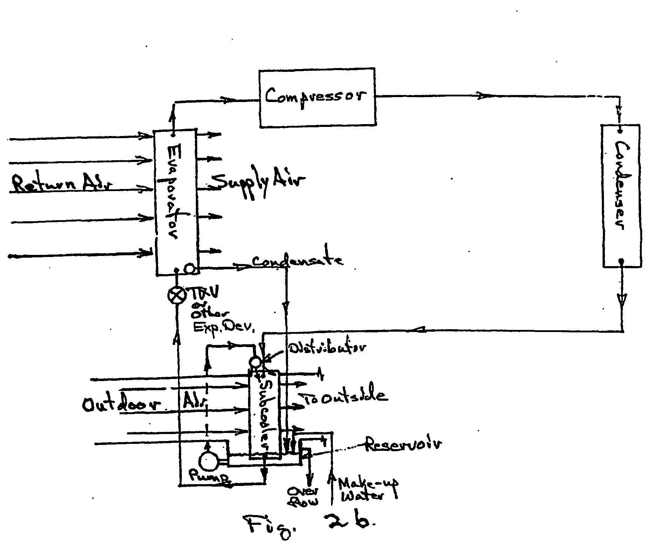

With reference to the drawings, and in particular to Figs. 2,2a, 2b, 3, 3a, 3b, 4, 4a, 4b. 5, 5a, 5b, 6, and 7 thereof, new and improved subcooling, and/or precooling and/or postheating devices for improved air conditioning(or heating) capacity and/or increased efficiency, lower power consumption and improved primary condenser (or evaporator) performance, embodying the principles and concepts of the present invention and generally designated by the reference number (10) for the subcooler only, and generally designated by the reference number (11) for the precooler only and generally designated by the reference number (12) for the postheater only will be described.

First, for the subcooler only (10) of the present invention, as illustrated in Figs. 2, 2a, and 2b, a subcooler for the liquid refrigerant relies on evaporative cooling by a means of direct use of the dry, cold building exhaust air (13) required for good indoor air quality (or after the exhaust air first undergoing a sensible heat exchange (14) with the incoming make up air (15) (or alternatively with outdoor air) to evaporate the water supplied by the condensate discharge (16) from the air conditioner, refrigeration or heat pump system, and /or other water (17) supplied from a municipal or other water supply system, wetted subcooler, which in turn cools the liquid refrigerant in the subcooler. Alternatively, the cool building exhaust air only could be used to sensibly cool the liquid refrigerant in the subcooler.

The exhaust air (13) from a building's air supply is generally much more constant in temperature and humidity than is outside ambient air. Further, this exhaust air (13) is generally much cooler and dryer than outside air, especially when air conditioning loads are high. Even after a sensible heat exchange (14) with incoming make up air (15) the low wet bulb temperature of the outgoing air is minimally affected, and is substantially lower than that of the outside air supply. By passing this relatively dry air across a wetted surface both the sensible air temperature and the water temperature will approach that of the wet bulb temperature of the building exhaust air. A refrigerant passing through a heat exchanger that has been wetted and that has the relatively dry air passing across it will be cooled by the evaporative cooling effect created by the dry air evaporating the water on the heat exchanger. Outdoor air, although less effective, is still very effective with use across said wetted subcooler and can be used alternatively.

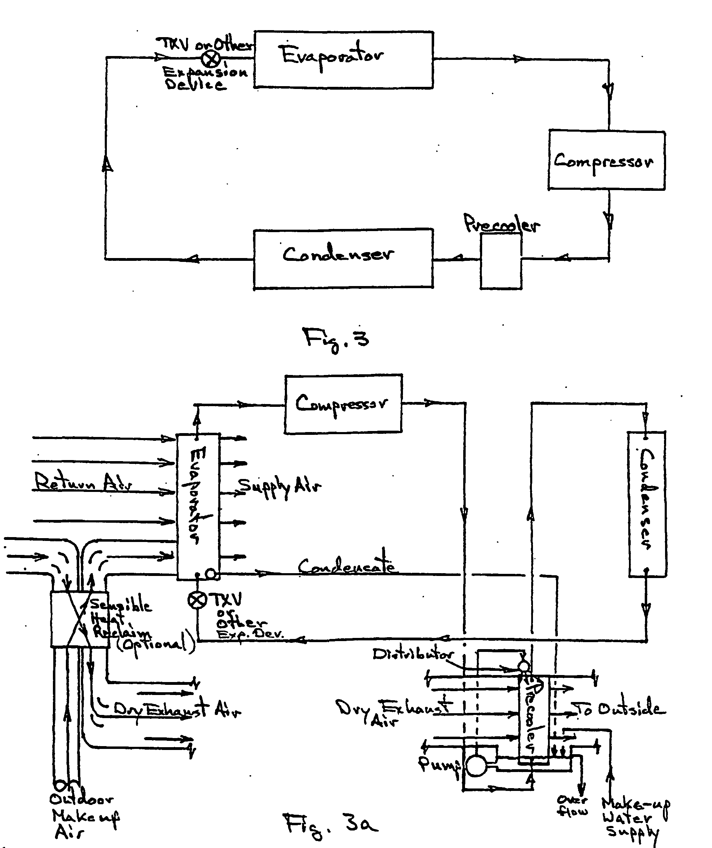

For the precooler system only (11) of the present invention, as illustrated in Figs. 3, 3a, and 3b, a precooler for the hot gas refrigerant relies on evaporative cooling (or alternatively on sensible cooling) by means of a direct use of the dry, cold building exhaust air required for good indoor air quality (alternatively without water) and the use of water supplied by the condensate discharge from the air conditioning or heat pump system and/or other water supply system to precool the hot gas refrigerant flowing through the precooler.

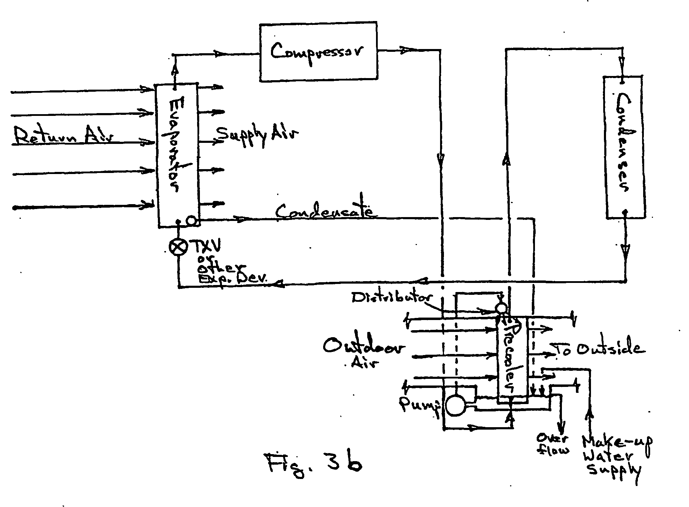

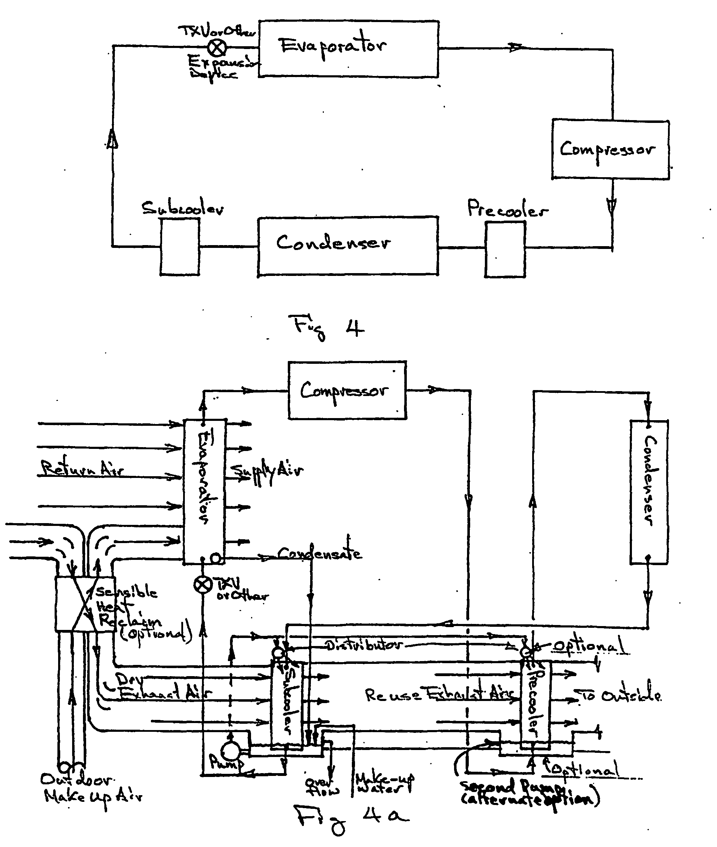

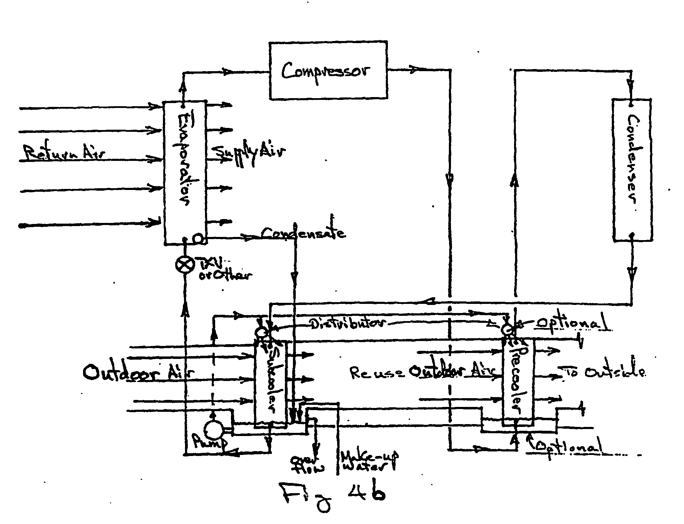

For the subcooler (10) plus precooler (11) combination of the present invention, as illustrated in Figs. 4, 4a, and 4b, a subcooler (10) for the liquid refrigerant and a precooler (11) for the hot gas refrigerant relies on an evaporative cooling process that will be used twice; a first use of the dry, cold building exhaust air (or alternatively outdoor air, Fig 4b) and condensate (or other) water supply that will first evaporatively cool the subcool heat exchanger which in turn cools the liquid refrigerant flowing through the subcooler and then the air supply passing out of the subcooler will flow through the wetted (or alternatively dry) precooler to evaporatively (or alternatively sensibly) cool the precool heat exchanger which in turn cools the hot gas refrigerant flowing through the precooler. The subcooler and precooler to be connected in serial communication in the refrigeration cycle as shown in Fig. 4. The precooler may or may not be wetted for this secondary use of the air discharging through the subcooler. If not wetted, the precool heat exchanger is sensibly cooled by the exhaust air supply, exiting the subcooler only.

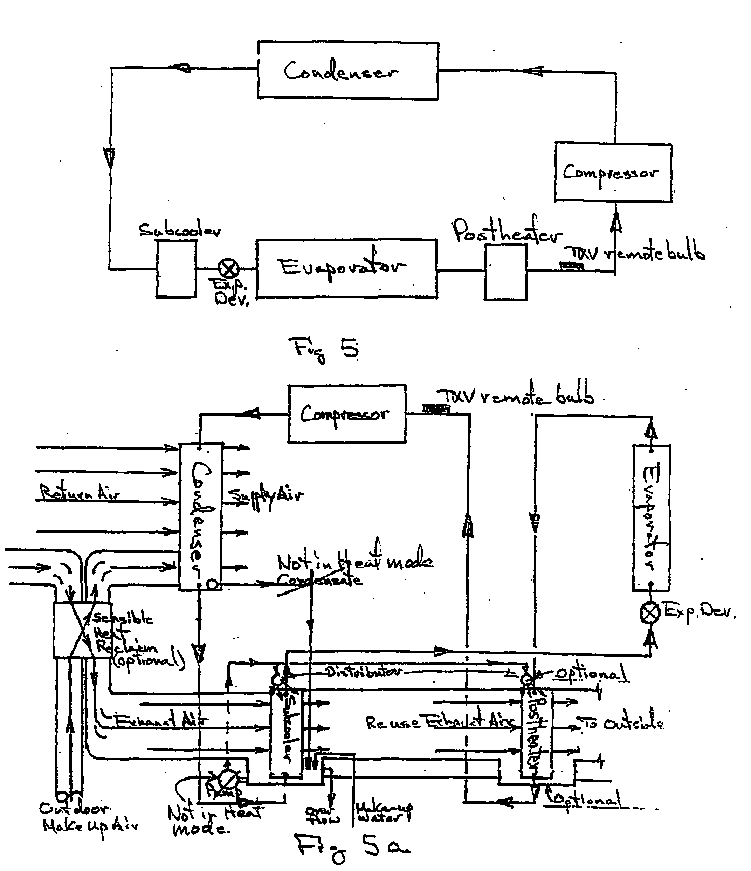

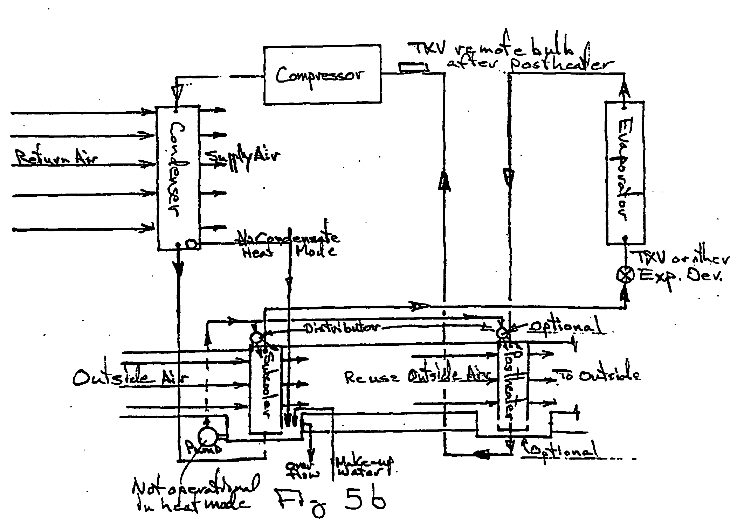

Figs. 5, 5a, and 5 b. for the subcooler (10) plus postheater (12) combination of the present invention, as illustrated in Figs. 5, and 5a a subcooler (10) for the liquid refrigerant and a postheater for the suction gas and liquid refrigerant rely on a sensible (conductive) cooling of the liquid refrigerant by means of passing the building exhaust air, which is cool relative to the liquid refrigerant temperature, through the subcool heat exchanger which in turn subcools the liquid refrigerant flowing through the subcooler and in turn further heats the outgoing building exhaust air. Then the air supply passing out of the subcooler flows through the postheater heat exchanger, which is cold relative to the subcooler warmed building exhaust air because the liquid and gas refrigerant in the postheater are on the low pressure side of the vapor compression cycle and located mechanically between the primary evaporator and the compressor. The subcooler warmed building exhaust air heat completes the evaporation of the liquid refrigerant and superheats the suction gas refrigerant. The subcooler and postheater to be connected in serial communication in the refrigeration cycle as shown in Fig. 5. Fig. 5b illustrates the same relationship between a subcooler (10) and a postheater (12) as in Fig. 5a, but illustrates the use of outside air to first subcool the liquid refrigerant and then using the subcooler warmed air to postheat the low pressure side gas and liquid refrigerant flowing through said postheater.

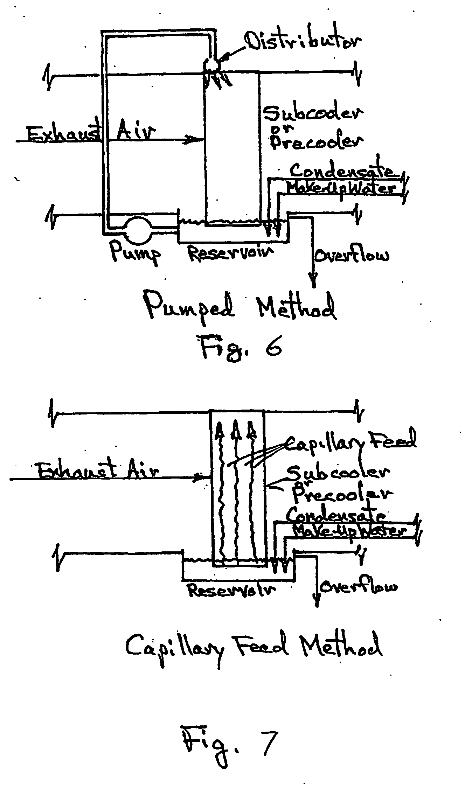

Fig. 6 is illustrative of some of the possible pump and control mechanisms for controlling the flow of condensate (or other) water across the subcooler and/or precooler heat exchangers. The methods illustrated include a mechanically pumped method whereby water is distributed across the top of the subcool and/or precool heat exchangers and allowed to flow down through the heat exchanger(s), perpendicular to the flow of the cold, dry building exhaust air.

Fig. 7 is illustrative of a capillary feed method that pulls water up onto the surface of the heat exchangers by means of the surface tension of water.

The increase in efficiency due to subcooling is well known and is due to the increase in capacity due to subcooling of the liquid refrigerant. What is unique in this invention is the innovative use of the cold, dry building exhaust air required for good indoor air quality (or alternatively, the use of outdoor air) and the use of condensate (or other) water to accomplish subcooling evaporatively or to use building exhaust air only to sensibly subcool the liquid refrigerant.

The increased efficiency of the refrigeration cycle due to precooling is due to, lower head pressure, higher compressor efficiency and more efficient use of the primary condenser. The unique and innovative use of the cold, dry building exhaust air (or alternatively outdoor air) required for good indoor air quality and the use of condensate (or other) water to accomplish precooling evaporatively , or to accomplish precooling by using the exhaust air(or outside air) after first use in the subcooler or conductively using only the exhaust air after subcooling, is extremely cost effective.

The present disclosure includes that contained in the appended claims, as well as that of the foregoing description. Although this invention has been described in its preferred form with a certain degree of particularity, it could be understood that the present disclosure of the preferred form has been made only by way of example and that numerous changes in the details of construction and the combination and arrangement of parts may be resorted to without departing from the scope of the invention.

## Claims

1. A heat exchange refrigerant subcool and/or precool system configured for receiving cold, dry building exhaust air, and stored condensate water from an air conditioner, refrigeration or heat pump system or other water supply that includes a condenser, an evaporator, a compressor and a refrigerant and that produces condensate water that is then stored ,
wherein the heat exchange refrigerant subcool and/or precool system comprises in combination:
a) a heat exchanger configured such that the condensate water is pumped across the heat exchanger while the cold, dry building exhaust air is passed over said heat exchanger for at least one of (1) evaporatively subcooling a liquid refrigerant that has already passed through the condenser of said air conditioner, refrigeration or heat pump system and (2) evaporatively precooling hot gas refrigerant before said refrigerant passes into the condenser of said air conditioner, refrigeration or heat pump system, wherein the heat exchanger is in the form of one or both of (i) a subcooler adapted to be serially connected in fluid communication with the output of the condenser and input to the evaporator of said air conditioner, refrigeration or heat pump system, enabling the refrigerant in said system to flow through said subcooler after first flowing through the condenser or (ii) a precooler adapted to be serially connected in fluid communication with the output of the compressor and the input of the condenser of said air conditioner, refrigeration or heat pump system, enabling hot gas refrigerant to flow through said precooler before passing into the condenser;
b) means for flowing the condensate and make up water, said means comprising one or more of (1) a reservoir located below one or both of the subcooler and the precooler that receives the condensate discharge from said air conditioner, refrigeration or heat pump and that also receives any needed make up water; each respective said reservoir being connected in fluid communication with the input of a pump that pumps stored condensate and make up water through a control system that enables the correct amount of water to flow across and wet the surface of, respectively, said subcooler and/or said precooler and then back to storage in the reservoir and (2) a capillary feed configured such that the bottom of one or both of said subcooler and said precooler is placed in a water storage tank that receives the condensate water from said air conditioner, refrigeration or heat pump and any needed make up water, for capillary feeding of said water to wet the surface of, respectively, said subcooler and/or the precooler;
c) one or both of said wetted subcooler and said precooler is connected in fluid communication with the cold, dry building exhaust air that subsequently cools by evaporation the water flowing over one or both of the subcooler and the precooler which in turn cools the refrigerant in one or both of the subcooler and the precooler; and
d) a means for said water to overflow to discharge, whereby one or both of said subcooler and said precooler utilizes said evaporative cooling process for providing, respectively, maximum available subcooling to the liquid refrigerant and/or maximum available precooling of the refrigerant of an air conditioner, refrigeration or heat pump system.

2. A heat exchange refrigerant subcool system as claimed in claim 1 wherein the means for flowing the condensate and make up water comprises a reservoir located below one or both of the subcooler and the precooler that receives the condensate discharge from said air conditioner, refrigeration or heat pump and that also receives any needed make up water; each respective said reservoir being connected in fluid communication with the input of a pump that pumps stored condensate and make up water through a control system that enables the correct amount of water to flow across and wet the surface of, respectively, said subcooler and/or said precooler and then back to storage in the reservoir.

3. A heat exchange refrigerant subcool system as set forth in claim 1 wherein the means for flowing the condensate and make up water through a control system comprises a capillary feed configured such that the bottom of one or both of said subcooler and said precooler is placed in a water storage tank that receives the condensate water from said air conditioner, refrigeration or heat pump and any needed make up water, for capillary feeding of said water to wet the surface of, respectively, said subcooler and/or the precooler.

4. A combination subcool and precool heat exchanger system as claimed in claim 1 comprising in combination:
a) a first heat exchanger, the subcooler serially connected in fluid communication with the output of the condenser and the input to the evaporator, enabling the refrigerant to flow through said subcooler after first flowing through the condenser and then the evaporator;
b) a second heat exchanger, the precooler serially connected in fluid communication with the output of a compressor and the input to the condenser, enabling the hot gas refrigerant to flow from the compressor through said precooler before passing into the condenser;
c) a reservoir system below the subcooler and precooler that receives the condensate and make-up water supplies;
d) said reservoir system connected in fluid communication with the input of a pump that pumps stored condensate and make-up water through a control system that enables the correct amount of condensate and/or make-up water to flow across and wet the surfaces of said subcooler and said precooler;
e) said subcooler further connected in fluid communication with cold, dry building exhaust air that subsequently cools by evaporation the water flowing over the subcooler which in turn cools the liquid refrigerant in the subcooler;
f) said precooler connected in fluid communication with the airflow output of the subcooler of the previously used building exhaust air, said previously used building exhaust air passing through said condensate and make-up water supply wetted precooler heat exchanger, where said exhaust air cools by evaporation the water flowing over the precooler which in turn precools the hot gas refrigerant flowing through the precooler: and
g) means for said condensate and make-up water to overflow to discharge, whereby said subcool and precool system utilizes said evaporative cooling for providing maximum available subcooling to the liquid refrigerant and maximum available precooling to the hot gas discharge refrigerant of said air conditioner; refrigeration or heat pump system,
wherein the system is configured to utilize the stored condensate water from the air conditioner, refrigeration or heat pump system and any needed make-up water by first pumping it across the first heat exchanger while the cold, dry building exhaust air is also passed over said first heat exchanger for first evaporatively subcooling the liquid refrigerant that has passed through the condenser of said air conditioner, refrigeration or heat pump system and is configured then to pass the air exhausting from the first heat exchanger through the second water wetted heat exchanger (the precooler) for subsequently precooling the hot gas discharge refrigerant from the compressor before said refrigerant passes into the condenser of said air conditioner, refrigeration or heat pump system.

5. A heat exchange refrigerant subcool and/or precool method comprising
(a) receiving cold, dry building exhaust air,
(b) receiving stored condensate water from an air conditioner, refrigeration or heat pump system or other water supply that includes a condenser, an evaporator, a compressor and a refrigerant and that produces condensate water that is then stored,
(c) flowing the condensate water across a heat exchanger while the cold, dry building exhaust air is passed over said heat exchanger for at least one of (1) evaporatively subcooling a liquid refrigerant that has already passed through the condenser of said air conditioner, refrigeration or heat pump system and (2) evaporatively precooling hot gas refrigerant before said refrigerant passes into the condenser of said air conditioner, refrigeration or heat pump system,
(d) wherein the heat exchanger is in the form of one or both of (i) a subcooler adapted to be serially connected in fluid communication with the output of the condenser and input to the evaporator of said air conditioner, refrigeration or heat pump system, enabling the refrigerant in said system to flow through said subcooler after first flowing through the condenser or (ii) a precooler adapted to be serially connected in fluid communication with the output of the compressor and the input of the condenser of said air conditioner, refrigeration or heat pump system, enabling hot gas refrigerant to flow through said precooler before passing into the condenser;
(e) flowing the condensate and make up water over one or both of the precooler and the subcooler, said flowing comprising either (1) pumping the condensate discharge from said air conditioner, refrigeration or heat pump and any needed make up water from a reservoir located below one or both of the subcooler and the precooler to flow across and wet the surface of, respectively said subcooler and/or the precooler and then back to storage in the reservoir, said water passing through a control system that enables the correct amount of water to flow across and wet the surface of, respectively said subcooler and/or the precooler and (2) capillary feeding condensate water from said air conditioner, refrigeration or heat pump and any needed make up water from a water storage tank in which the bottom of one or both of said subcooler and said precooler is placed to wet the surface of, respectively, said subcooler and/or said precooler;
(f) connecting one or both of said wetted subcooler and said precooler in fluid communication with the cold, dry building exhaust air that cools by evaporation the water flowing over one or both of the subcooler and the precooler which in turn cools the refrigerant in one or both of the subcooler and the precooler; and
(g) allowing said water to overflow to discharge, whereby one or both of said subcooler and said precooler utilizes said evaporative cooling process for providing maximum available subcooling to the liquid refrigerant and/or maximum available precooling of the refrigerant, respectively, of an air conditioner, refrigeration or heat pump system.

## Patentansprüche

1. System zum Unterkühlen und/oder Vorkühlen eines Wärmetausch-Kühlmittels, welches System für den Empfang von kalter, trockener Gebäudeabluft und gespeichertem Kondensatwasser von einem Klimatisierungs-, Kälte- oder Wärmepumpensystem oder einer anderen Wasserzuführung ausgebildet ist, das oder die einen Verflüssiger, einen Verdampfer, einen Verdichter und ein Kältemittel aufweisen und die Kondensatwasser produzieren, das dann gespeichert wird,
wobei das System zwn Unterkühlen und/oder Vorkühlen eines Wärmetausch-Kühlmittels folgendes in Kombination aufweist:
a) einen Wärmeaustauscher, der so ausgebildet ist, dass das Kondensatwasser über den Wärmeaustauscher gepumpt wird, während die kalte, trockene Gebäudeabluft für wenigstens eines von (1) Verdampfungs-Unterkühlen eines flüssigen Kältemittels, das bereits durch den Kondensator des Klimatisierungs-, Kälte- oder Wärmepumpensystems hindurchgelaufen ist, und (2) Verdampfungs-Vorkühlen von Heißgas-Kältemittel, bevor das Kältemittel in den Kondensor des Klimatisierungs-, Kälte- oder Wärmepumpensystems hineinläuft, über den Wärmeaustauscher geleitet wird, wobei der Wärmeaustauscher die Form hat von einem oder beidem von (i) einem Unterkühler, der dazu eingerichtet ist, seriell in fließfähiger Kommunikation mit dem Ausgang des Kondensators und dem Eingang zu dem Verdampfer des Klimatisierungs-, Kälte- oder Wärmepumpensystems verbunden zu werden, wodurch dem Kältemittel in dem System ermöglicht wird, durch den Unterkühler hindurchzufließen, nachdem es znerst durch den Kondensator geflossen ist, oder (ii) einem Vorkühler, der dazu eingerichtet ist, seriell in fließfähiger Kommunikation mit dem Ausgang des Verdichters und dem Eingang des Kondensators des Klimatisierungs-, Kälte- oder Wärmepumpensystems verbunden zu werden, wodurch dem Heißgas-Kältemittel ermöglicht wird, durch den Vorkühler hindurchzufließen, bevor es in den Kondensator hineinläuft;
b) Einrichtungen zum Fördern des Kondensats und Ansatzwassers, wobei die Einrichtungen eines oder mehr von (1) einem Vorratsbehälter, der unter einem oder beiden von dem Unterkühler und dem Vorkühler angeordnet ist und den Kondensatablass von der Klimatisierungs-, Kälte- oder Wärmepumpe empfängt und der außerdem benötigtes Ansatzwasser empfängt; wobei jeder jeweilige Vorratsbehälter in fließfähiger Kommunikation mit dem Eingang einer Pumpe verbunden ist, die gespeichertes Kondensat und Ansatzwasser durch ein Steuersystem pumpt, das ermöglicht, dass die korrekte Menge an Wasser jeweils über die Oberfläche des Unterkühlers und/oder des Vorkühlers fließt und diese befeuchtet und dann zurück zur Speicherung in dem Vorratsbehälter fließt, und (2) einer Kapillarzuführung, die so konfiguriert ist, dass der untere Teil von einem oder beidem von dem Unterkühler und dem Vorkühler in einem Wasserspeichertank platziert ist, der das Kondensatwasser von der Klimatisierungs-, Kälte oder Wärmepumpe und benötigtes Ansatzwasser empfängt, um das Wasser kapillar zuzuführen, um jeweils die Oberfläche des Unterkühlers und/oder des Vorkühlers zu befeuchten, aufweist;
c) einer oder beide von dem befeuchteten Unterkühler und Vorkühler ist/sind in fließfähiger Kommunikation mit der kalten, trockenen Gebäudeabluft verbunden, die nachfolgend durch Verdampfung das Wasser kühlt, das über einen oder beide von dem Unterkühler und dem Vorkühler fließt, was wiederum das Kältemittel in einem oder beiden von dem Unterkühler und dem Vorkühler kühlt, und
d) eine Einrichtung zum Überlaufen für das Wasser zum Ablass, wobei einer oder beide von dem Unterkühler und dem Vorkühler den Vordampfungskühlprozess nutzt/nutzen, um jeweils maximal verfügbares Unterkühlen für das flüssige Kältemittel und/oder maximal verfügbares Vorkühlen des Kältemittels eines Klimatisierungs-, Kälte- oder Wärmepumpensystems bereitzustellen,

2. Wärmeaustausch-Kältemitel-Unterkühlsystem nach Anspruch 1, wobei die Einrichtung zum Fördern des Kondensats und des Ansatzwassers einen Vorratsbehälter aufweist, der unter einem oder beiden von dem Unterkühler und dem Vorkühler angeordnet ist und den Kondensatausstoß von der Klimatisierungs-, Kälte- oder Wärmepumpe empfängt und der außerdem benötigtes Ansatzwasser empfängt; wobei jeder jeweilige Vorratsbehälter in fließfähiger Kommunikation mit dem Eingang einer Pumpe verbunden ist, die gespeichertes Kondensat und Ansatzwasser durch ein Steuersystem pumpt, das ermöglicht dass die korrekte Menge an Wasser jeweils über die Oberfläche des Unterkühlers und/oder des Vorkühlers fließt und diese befeuchtet und dann zurück zur Speicherung in dem Vorratsbehälter fließt.

3. Wärmeaustausch-Kältemittel-Unterkühlsystem nach Anspruch 1, wobei die Einrichtung zum Fördern des Kondensats und des Zusatzwassers durch ein Steuersystem eine Kapillarzuführung aufweist, die so ausgebildet ist, dass der untere Teil von einem oder beidem von dem Unterkühler und dem Vorkühler in einem Wasserspeichertank platziert ist, der das Kondensatwasser von der Klimatisierungs-, Kälte- oder Wärmepumpe und benötigtes Ansatzwasser empfängt, um das Wasser kapillar zuzuführen, um jeweils die Oberfläche des Unterkühlers und/oder des Vorkühlers zu befeuchten.

4. Kombiniertes Unterkühl- und Vorkühl-Wärmeaustauschsystem nach Anspruch 1, welches folgendes in Kombination aufweist:
a) einen ersten Wärmeaustauscher, wobei der Unterkühler seriell in fließfähiger Kommunikation mit dem Ausgang des Kondensators und dem Eingang zu dem Verdampfer verbunden ist, wodurch dem Kältemittel ermöglicht wird, durch den Unterkühler hindurchzufließen, nachdem es zuerst durch den Kondensator hindurchgeführt ist und danach durch den Verdampfer;
b) einen zweiten Wärmeaustauscher, wobei der Vorkühler seriell in fließfähiger Kommunikation mit dem Ausgang eines Verdichters und dem Eingang zu dem Kondensator verbunden ist, wodurch dem Heißgas-Kältemittel ermöglicht wird, von dem Verdichter durch den Vorkühler hindurchzufließen, bevor es in den Kondensator hineinläuft;
c) ein Vorratsbehältersystem unter dem Unterkühler und dem Vorkühler, das die Kondensat- und Ansatzwasserzuführungen empfängt;
d) wobei das Vorratsbehältersystem in fließfähiger Kommunikation mit dem Eingang einer Pumpe verbunden ist, die gespeichertes Kondensat und Ansatzwasser durch ein Steuersystem pumpt, das ermöglicht, dass die korrekte Menge an Kondensat und/oder Ansatzwasser über die Oberflächen des Unterkühlers und des Vorkühlers fließt und diese befeuchtet;
e) wobei der Unterkühler weiters in fließfähiger Kommunikation mit kalter, trockener Gebäudeabluft verbunden ist, die nachfolgend das Wasser, das über den Unterkühler fließt durch Verdampfung kühlt, was wiederum das flüssige Kältemittel in dem Unterkühler kühlt;
f) wobei der Vorkühler in fließfähiger Kommunikation mit dem Luftstromausgang des Unterkühlers der zuvor verwendeten Gebäudeabluft verbunden ist, die zuvor verwendete Gebändeabluft durch den mit Kondensat- und Ansatzwasserzuführung befeuchteten Vorkühler-Wärmeaustauscher hindurchläuft und die Abluft das Wasser, das über den Vorkühler fließt, durch Verdampfung kühlt, was wiederum das Heißgas-Kältemittel, das durch den Vorkühler hindurchfließt, vorkühlt; und
g) Einrichtungen zum Überlaufen für das Kondensat und das Ansatzwasser zum Ablass, wobei das Unterkühl- und Vorkühlsystem die Verdampfungskühlung nutzt, um maximal verfügbares Unterkühlen für das flüssige Kältemittel und maximal verfügbares Vorkühlen für das Heißgas-Ablass-Kältemittel des Luftkonditionierungs, Kälte- oder Wärmepumpensystems bereitzustellen;
wobei das System so ausgebildet ist, dass das gespeicherte Kondensatwasser von dem Klimatisierungs, Kälte- oder Wärmepumpensystem und benötigtes Ansatzwasser genutzt wird, indem es zuerst über den ersten Wärmeaustauscher gepumpt wird, während die kalte, trockene Gebäudeluft ebenfalls über den ersten Wärmeaustauscher geleitet wird, um zuerst das flüssige Kältemittel, das durch den Kondensator des Klimatisierungs-, Kälte- oder Wärmepumpensystems hindurchgelaufen ist, verdampfend zu unterkühlen, und ausgebildet ist, dann die Luft, die von dem ersten Wärmeaustauscher abgelassen wird, durch den zweiten befeuchteten Wärmeaustauscher (den Vorkühler) hindurchzuleiten, um nachfolgend das Heißgas-Ausstoß-Kältemittel von dem Verdichter vorzukühlen, bevor das Kältemittel in den Verflüssiger des Klimatisierungs-, Kälte- oder Wärmepumpensystems hineinläuft.

5. Wärmeaustausch-Kältemittel-Unterkühl- und/oder Vorkühlverfahren, welches aufweist:
a) Entgegennehmen von kalter, trockener Gebäudeabluft;
b) Entgegennehmen von gespeichertem Kondensatwasser von einem Klimatisierungs-, Kälte- oder Wärmepumpensystem oder einer anderen Wasserzuführung, die einen Kondensator, einen Verdampfer, einen Verdichter und ein Kältemittel aufweist und die Kondensatwasser produzieren, das dann gespeichert wird;
c) Fördern des Kondensatwassers über einen Wärmeaustauscher, während die kalte, trockene Gebäudeabluft für wenigstens eines von (1) Verdampfumgs-Unterkühlen eines flüssigen Kältemittels, das bereits durch den Kondensator des Klimatisierungs-, Kälte- oder Wärmepumpensystems hindurchgeströmt ist, und (2) Verdampfungs-Vorkühlen von Heißgas-Kältemittel, bevor das Kältemittel in den Kondensator des Klimatisierungs-, Kälte- oder Wärmepumpensystems hineinströmt, über den Wärmeaustauscher geleitet wird;
d) wobei der Wärmeaustauscher die Form hat von einem oder beidem von (i) einem Unterkühler, der dazu eingerichtet ist, seriell in fließfähiger Kommunikation mit dem Ausgang des Kondensators und dem Eingang zu dem Verdampfer des Klimatisierungs-, Kälte- oder Wärmepumpensystems verbunden zu werden, wodurch dem Kältemittel in dem System ermöglicht wird, durch dem Unterkühler hindurchzufließen, nachdem es zuerst durch den Verflüssiger hindurchgeflossen ist, oder (ii) einem Vorkühler, der dazu eingerichtet ist, seriell in fließfähiger Kommunikation mit dem Ausgang des Verdichters und dem Eingang des Kondensators des Klimatisierungs-, Kälte- oder Wärmepumpensystems verbunden zu werden, wodurch dem Hcißgas-Kältemittel ermöglicht wird, durch den Vorkühler hindurchzu-fließen, bevor es in den Kondensator hineinläuft;
e) Fördern des Kondensats und des Ansatzwassers über einen oder beide von dem Vorkühler und dem Unterkühler, wobei das Fördern entweder (1) Pumpen des Kondensatablasses von der Klimatisierungs-, Kälte- oder Wärmepumpe und benötigten Ansatzwassers von einem Vorratsbehälter, der unter einem oder beiden von dem Unterkühler und dem Vorkühler angeordnet ist, um jeweils über die Oberfläche des Unterkühlers und/oder des Vorkühlers zu fließen und diese zu befeuchten und dann zurück zur Speicherung in dem Vorratsbehälter zu fließen, wobei das Wasser durch ein Steuersystem hindurchläuft, das ermöglicht, dass die korrekte Menge an Wasser jeweils über die Oberfläche des Unterkühlers und/oder des Vorkühlers fließt und diese befeuchtet, und (2) kapillares Zuführen von Kondensatwasser von der Klimatisierungs-, Kälte- oder Wärmepumpe und benötigtem Ansatzwasser von einem Wasserspeichertank, in dem der untere Teil von einem oder beidem von dem Unterkühler und dem Vorkühler platziert ist, um jeweils die Oberfläche des Unterkühlers und/oder des Vorkühlers zu befeuchten, umfasst;
f) Verbinden von einem oder beidem von dem befeuchteten Unterkühler und Vorkühler in fließfähiger Kommunikation mit der kalten, trockenen Gebäudeabluft, die durch Verdampfung das Wasser kühlt, das über einen oder beide von dem Unterkühler und dem Vorkühler fließt, was wiederum das Kältemittel in einem oder beidem von dem Unterkühler und dem Vorkühler kühlt; und
g) Ermöglichen von Überlaufen des Wassers zum Abfluß, wobei einer oder beide von dem Unterkühler und dem Vorkühler den Verdampfungskühlprozess nutzt/nutzen, um jeweils maximal verfügbares Unterkühlen für das flüssige Kältemittel und/oder maximal verfügbares Vorkühlen des Kältemittel eines Luftkonditionierungs-, Kälte- oder Wärmepumpensystems bereitzustellen.

## Revendications

1. Dispositif de transfert thermique pour pré- et/ou sous-refroidir un réfrigérant configuré pour recevoir de l'air d'évacuation de bâtiment sec et froid et de l'eau de condensation stockée provenant d'un système de conditionneur d'air, de réfrigération ou de pompe à chaleur ou autre dispositif d'alimentation en eau qui comprend un condenseur, un évaporateur, un compresseur et un réfrigérant et qui produit de l'eau de condensation qui est ensuite stockée,
le dispositif de transfert thermique pour pré- et/ou sous-refroidir un réfrigérant comprenant en combinaison
a) un échangeur de chaleur configuré de telle sorte que l'eau de condensation est pompée à travers l'échangeur de chaleur tandis que l'air d'évacuation de bâtiment sec et froid passe au-dessus dudit échangeur de chaleur pour (1) sous-refroidir par évaporation un liquide réfrigérant qui a déjà traversé le condenseur dudit système de conditionneur d'air, de réfrigération ou de pompe à chaleur et/ou (2) pré-refroidir par évaporation un gaz chaud réfrigérant avant que ledit réfrigérant passe dans le condenseur dudit système de conditionneur d'air, de réfrigération ou de pompe à chaleur, l'échangeur de chaleur se présentant sous la forme de l'un ou des deux parmi (i) un sous-refroidisseur adapté pour être connecté en série par communication de fluide avec la sortie du condenseur et l'entrée de l'évaporateur dudit système de conditionneur d'air, de réfrigération ou de pompe à chaleur, permettant au réfrigérant dans ledit système de circuler à travers ledit sous-refroidisseur après avoir d'abord circulé à travers le condenseur et/ou (ii) un pré-refroidisseur adapté pour être connecté en série par communication de fluide avec la sortie du compresseur et l'entrée du condenseur dudit système de conditionneur d'air, de réfrigération ou de pompe à chaleur, permettant au gaz chaud réfrigérant de circuler à travers ledit sous-refroidisseur avant de passer dans le condenseur;
b) un moyen pour faire circuler l'eau de condensation et de remplissage, ledit moyen comprenant un ou plusieurs éléments parmi (1) un réservoir situé sous le sous-refroidisseur et/ou le pré-refroidisseur qui reçoit la décharge de condensation dudit système de conditionneur d'air, de réfrigération ou de pompe à chaleur et qui reçoit aussi toute l'eau de remplissage nécessaire, ledit réservoir étant respectivement connecté par communication de fluide avec l'entrée d'une pompe qui pompe l'eau de condensation et de remplissage stockée par le biais d'un système de contrôle qui permet à la bonne quantité d'eau de circuler à travers la surface, respectivement, dudit sous-refroidisseur et/ou dudit pré-refroidisseur et de mouiller cette surface, puis de revenir se stocker dans le réservoir et (2) une alimentation capillaire configurée de telle sorte que le fond dudit sous-refroidisseur et/ou dudit pré-refroidisseur est placé dans une cuve de stockage d'eau qui reçoit l'eau de condensation dudit système de conditionneur d'air, de réfrigération ou de pompe à chaleur et toute l'eau de remplissage nécessaire, pour amener par capillarité ladite eau pour mouiller la surface, respectivement, dudit sous-refroidisseur et/ou dudit pré-refroidisseur;
c) ledit sous-refroidisseur et/ou ledit pré-refroidisseur mouillés étant connectés par communication de fluide avec l'air d'évacuation de bâtiment sec et froid, qui refroidit ensuite par évaporation l'eau circulant au-dessus du sous-refroidisseur et/ou du pré-refroidisseur, qui refroidit à son tour le réfrigérant dans le sous-refroidisseur et/ou le pré-refroidisseur;
d) un moyen pour ladite eau de déborder dans la décharge, ledit sous-refroidisseur et/ou ledit pré-refroidisseur utilisant ledit processus de refroidissement par évaporation pour fournir respectivement le sous-refroidissement maximum disponible au liquide réfrigérant et/ou le pré-refroidissement maximum disponible au réfrigérant d'un système de conditionneur d'air, de réfrigération ou de pompe à chaleur.

2. Dispositif de transfert thermique pour sous-refroidir un réfrigérant selon la revendication 1 dans lequel le moyen pour faire circuler l'eau de condensation et de remplissage comprend un réservoir situé sous le sous-refroidisseur et/ou le pré-refroidisseur qui reçoit la décharge de condensation dudit système de conditionneur d'air, de réfrigération ou de pompe à chaleur et qui reçoit aussi toute l'eau de remplissage nécessaire, ledit réservoir étant respectivement connecté par communication de fluide avec l'entrée d'une pompe qui pompe l'eau de condensation et de remplissage stockée par le biais d'un système de contrôle qui permet à la bonne quantité d'eau de circuler à travers la surface, respectivement, dudit sous-refroidisseur et/ou dudit pré-refroidisseur et de mouiller cette surface, puis de revenir se stocker dans le réservoir.

3. Dispositif de transfert thermique pour sous-refroidir un réfrigérant selon la revendication 1 dans lequel le moyen pour faire circuler l'eau de condensation et de remplissage par le biais d'un système de contrôle comprend une alimentation capillaire configurée de telle sorte que le fond dudit sous-refroidisseur et/ou dudit pré-refroidisseur est placé dans une cuve de stockage d'eau qui reçoit l'eau de condensation dudit système de conditionneur d'air, de réfrigération ou de pompe à chaleur et toute l'eau de remplissage nécessaire, pour amener ladite eau par capillarité pour mouiller la surface, respectivement, dudit sous-refroidisseur et/ou dudit pré-refroidisseur.

4. Dispositif de transfert thermique combiné pour pré- et/ou sous-refroidir un réfrigérant selon la revendication 1 comprenant en combinaison :
a) un premier échangeur de chaleur, le sous-refroidisseur connecté en série par communication de fluide avec la sortie du condenseur et l'entrée de l'évaporateur, permettant au réfrigérant de circuler à travers ledit sous-refroidisseur après avoir d'abord circulé à travers le condenseur puis l'évaporateur;
b) un second échangeur de chaleur, le pré-refroidisseur connecté en série par communication de fluide avec la sortie d'un compresseur et l'entrée du condenseur, permettant au gaz chaud réfrigérant de circuler à partir du compresseur à travers ledit pré-refroidisseur avant de passer dans le condenseur;
c) un système de réservoir sous le sous-refroidisseur et le pré-refroidisseur, qui reçoit les alimentations en eau de condensation et de remplissage;
d) ledit système de réservoir connecté par communication de fluide avec l'entrée d'une pompe qui pompe l'eau de condensation et de remplissage stockée par le biais d'un système de contrôle qui permet à la bonne quantité d'eau de condensation et/ou de remplissage de circuler à travers les surfaces dudit sous-refroidisseur et dudit pré-refroidisseur et de mouiller ces surfaces;
e) ledit sous-refroidisseur connecté en outre par communication de fluide avec de l'air d'évacuation de bâtiment sec et froid, qui refroidit ensuite par évaporation l'eau circulant au-dessus du sous-refroidisseur, qui refroidit à son tour le liquide réfrigérant dans le sous-refroidisseur;
f) ledit pré-refroidisseur connecté par communication de fluide avec la sortie de flux d'air du sous-refroidisseur de l'air d'évacuation de bâtiment précédemment utilisé, ledit air d'évacuation de bâtiment précédemment utilisé passant à travers ledit échangeur de chaleur pré-refroidisseur mouillé par l'alimentation en eau de condensation et de remplissage, ledit air d'évacuation refroidissant par évaporation l'eau circulant au-dessus du pré-refroidisseur, qui pré-refroidit à son tour le gaz chaud réfrigérant circulant à travers le pré-refroidisseur; et
g) un moyen pour permettre à ladite eau de condensation et de remplissage de déborder vers la décharge, ledit dispositif de sous-refroidissement et de pré-refroidissement utilisant ledit refroidissement par évaporation pour fournir le sous-refroidissement maximum disponible au liquide réfrigérant et le pré-refroidissement maximum disponible au gaz chaud réfrigérant de décharge dudit système de conditionneur d'air, de réfrigération ou de pompe à chaleur,
le dispositif étant configuré pour utiliser l'eau de condensation stockée provenant du système de conditionneur d'air, de réfrigération ou de pompe à chaleur et toute l'eau de remplissage nécessaire en la pompant d'abord à travers le premier échangeur de chaleur, tandis que l'air d'évacuation de bâtiment sec et froid passe au-dessus dudit premier échangeur de chaleur pour d'abord sous-refroidir par évaporation le liquide réfrigérant qui a traversé le condenseur dudit système de conditionneur d'air, de réfrigération ou de pompe à chaleur, et étant configuré pour faire passer ensuite l'évacuation d' air à partir du premier échangeur de chaleur à travers le second échangeur de chaleur mouillé d'eau (le pré-refroidisseur) pour ensuite pré-refroidir le gaz chaud réfrigérant de décharge provenant du compresseur avant que ledit réfrigérant passe dans le condenseur dudit système de conditionneur d'air, de réfrigération ou de pompe à chaleur.

5. Procédé de transfert thermique pour pré- et/ou sous-refroidir un réfrigérant, comprenant
(a) la réception d'air d'évacuation de bâtiment sec et froid,
(b) la réception d'eau de condensation stockée provenant d'un système de conditionneur d'air, de réfrigération ou de pompe à chaleur ou autre alimentation en eau qui comprend un condenseur, un évaporateur et un réfrigérant et qui produit de l'eau de condensation qui est ensuite stockée,
(c) la circulation de l'eau de condensation à travers un échangeur de chaleur tandis que l'air d'évacuation de bâtiment sec et froid passe au-dessus dudit échangeur de chaleur pour (1) sous-refroidir par évaporation un liquide réfrigérant qui a déjà traversé le condenseur dudit système de conditionneur d'air, de réfrigération ou de pompe à chaleur et/ou (2) pré-refroidir par évaporation un gaz chaud réfrigérant avant que ledit réfrigérant passe dans le condenseur dudit système de conditionneur d'air, de réfrigération ou de pompe à chaleur,
(d) l'échangeur de chaleur se présentant sous la forme de l'un ou des deux parmi (i) un sous-refroidisseur adapté pour être connecté en série par communication de fluide avec la sortie du condenseur et l'entrée de l'évaporateur dudit système de conditionneur d'air, de réfrigération ou de pompe à chaleur, permettant au réfrigérant dans ledit système de circuler à travers ledit sous-refroidisseur après avoir d'abord circulé à travers le condenseur et/ou (ii) un pré-refroidisseur adapté pour être connecté en série par communication de fluide avec la sortie du compresseur et l'entrée du condenseur dudit système de conditionneur d'air, de réfrigération ou de pompe à chaleur, permettant au gaz chaud réfrigérant de circuler à travers ledit pré-refroidisseur avant de passer dans le condenseur;
(e) la circulation de l'eau de condensation et de remplissage au-dessus du pré-refroidisseur et/ou du sous-refroidisseur, ladite circulation comprenant (1) le pompage de la décharge de condensation provenant dudit système de conditionneur d'air, de réfrigération ou de pompe à chaleur et de toute l'eau de remplissage nécessaire provenant d'un réservoir situé sous le sous-refroidisseur et/ou le pré-refroidisseur pour circuler à travers la surface, respectivement, dudit sous-refroidisseur et/ou dudit pré-refroidisseur et mouiller cette surface, puis revenir en stockage dans le réservoir, ladite eau traversant un système de contrôle qui permet à la bonne quantité d'eau de circuler à travers la surface, respectivement, dudit sous-refroidisseur et/ou dudit pré-refroidisseur et de mouiller cette surface, et/ou (2) l'amenée par capillarité d'eau de condensation provenant dudit système de conditionneur d'air, de réfrigération ou de pompe à chaleur et de toute l'eau de remplissage nécessaire provenant d'une cuve de stockage d'eau dans laquelle le fond dudit sous-refroidisseur et/ou dudit pré-refroidisseur est placé pour mouiller la surface, respectivement, dudit sous-refroidisseur et/ou dudit pré-refroidisseur;
(f) la connexion dudit sous-refroidisseur et/ou dudit pré-refroidisseur mouillé(s) par communication de fluide avec l'air d'évacuation de bâtiment sec et froid qui refroidit par évaporation l'eau circulant au-dessus du sous-refroidisseur et/ou du pré-refroidisseur, qui refroidit à son tour le réfrigérant dans le sous-refroidisseur et/ou le pré-refroidisseur; et
(g) la possibilité pour ladite eau de déborder dans la décharge, ledit sous-refroidisseur et/ou ledit pré-refroidisseur utilisant ledit processus de refroidissement par évaporation pour fournir, respectivement, le sous-refroidissement maximum disponible au liquide réfrigérant et/ou le pré-refroidissement maximum disponible au réfrigérant d'un système de conditionneur d'air, de réfrigération ou de pompe à chaleur.
